(19) Europäisches Patentamt

European Patent Office

Office européen des brevets

(11) Publication number: **0 245 110 B1**

(12) **EUROPEAN PATENT SPECIFICATION**

(45) Date of publication of patent specification: **13.05.92**

(21) Application number: **87304113.1**

(22) Date of filing: **08.05.87**

(51) Int. Cl.⁵: **F15D 1/00**, F24F 9/00, B65G 53/24

(54) **Apparatus for generating an artificial tornado.**

(30) Priority: **09.05.86 JP 106384/86**

(43) Date of publication of application:
**11.11.87 Bulletin 87/46**

(45) Publication of the grant of the patent:
**13.05.92 Bulletin 92/20**

(84) Designated Contracting States:
**DE FR GB**

(56) References cited:
**EP-A- 0 132 802**
**DE-A- 2 701 845**
**DE-A- 3 403 547**
**FR-A- 2 171 411**
**US-A- 3 998 142**

(73) Proprietor: **Japan Air Curtain Company Limited**
**1-6-7 Hatsudai Shibuya-ku**
**Tokyo(JP)**

(72) Inventor: **Matsui, Shigeo**
**1-7-86 Eifuku Suginami-Ku**
**Tokyo(JP)**

(74) Representative: **Hall, Graeme Keith et al**
**Frank B. Dehn & Co. Imperial House 15-19**
**Kingsway**
**London WC2B 6UZ(GB)**

Rank Xerox (UK) Business Services
(3.08/2.19/2.0)

## Description

This invention relates to an apparatus for generating an artificial tornado.

In commonly used conventional methods of discharging detrimental gases and dusts, an exhaust hood is provided near their generating source to extract them. However, there is no directivity at all in the suction and, if separated from the sucking part, the wind velocity will attenuate so quickly that it has been difficult to obtain a required controlled wind velocity. Such a large volume of not only the generated detrimental gases and dust but also ambient air is sucked in that a large blower and duct are required. Thus, there have been many problems with such equipment which have also proved to be expensive.

There has recently been developed a method of generating an air vortex which acts as an artificial tornado to discharge detrimental gases and dusts. In this method, an eddy current is made in a horizontally long exhaust hood to suck air in the central part to generate a "tornado". This tornado is generated in the enclosed exhaust hood and can create a sucked wind velocity in the horizontal direction but has no suction directivity in free space outside the exhaust hood. In this sense, this method is no different from the conventional side hood system. There is also known a device wherein air is blown out in the form of a vortex by burning with a burner or rotating a blowing nozzle. However, these so-called blowing tornado mechanisms are quite different from the tornado generating mechanism of the present invention.

DE-A-3403547 discloses apparatus according to the preamble of claim 1 which generates a fluid vortex, however this vortex is generated in only two dimensions and is thus of limited practical utility.

According to a broad aspect of the present invention there is provided apparatus for generating an artificial tornado in a fluid, comprising means for inducing a region of rotary fluid flow, and suction means arranged to extract fluid from a central portion of said region simultaneously with the induction of said rotary fluid flow to create a low pressure central portion of said region, whereby a tornado may be generated directed toward said suction means, characterised in that said rotary flow induction means comprises a plurality of parallel fluid supply pipes defining a space therebetween, each said supply pipe having a plurality of ports through which fluid may be directed toward an adjacent supply pipe, fluid being directed into said supply pipes from one end and each said fluid supply port comprising an inwardly directed tube, the length of said tubes increasing in the direction of fluid flow through said supply pipe, said supply pipes being interconnected at at least one end by a shield member, and in that said suction means are fixed in said shield member, wherein said tornado may be generated within the space defined between said fluid supply pipes.

By means of this arrangment, at least in its preferred forms, it is possible to generate an "artificial" tornado, that is to say, a substantially converging helical fluid flow.

The invention has many different possible applications. Firstly the apparatus may be used to collect and discharge detrimental gases or dust particles. Conventional methods have employed large extraction hoods, however such hoods have little directivity and consequently a large volume of air must be extracted, thus increasing the cost and size of such hoods. If the extraction means is operatively connected to the fluid supply pipes air may be recirculated, and if heating or cooling means is provided, preferably adjacent the extraction means, a continuous flow of hot or cold air may be circulated. This provides a particularly efficient manner of heating or cooling a space, e.g. a factory or office, in comparison with conventional methods, e.g. directly blowing warm or cold air into the space.

Other possible applications include the agitation of fluid, torque transfer, as a means of providing decoration, and as an air shower, and examples of these applications will be described hereinbelow, however many other possible applications will be imagined.

Several embodiments of the present invention will now be described by way of example and with reference to the accompanying drawings, in which:-

Figs. 1(a) - (b) are explanatory schematic views showing tornado generating apparatus according to one embodiment and its operating principle,

Figs. 2 to 7 are explanatory schematic views showing methods of using generated fluid tornadoes formed by apparatus similar to that shown in Fig.1, in particular

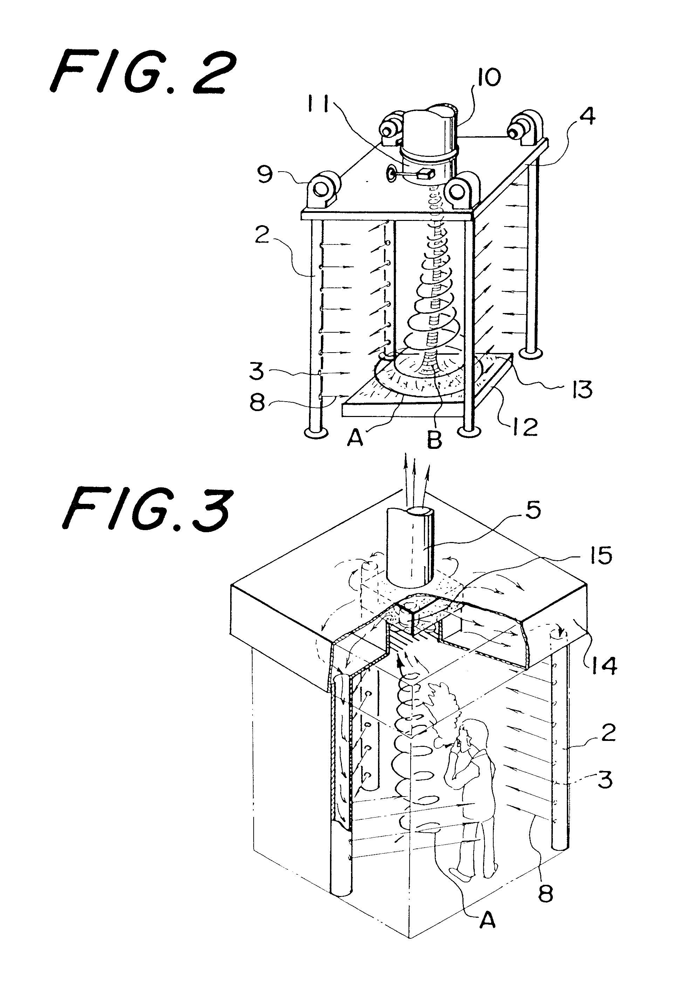

Fig. 2 shows a method of collecting and discharging detrimental gases and dusts,

Fig. 3 shows a method of local cooling and heating,

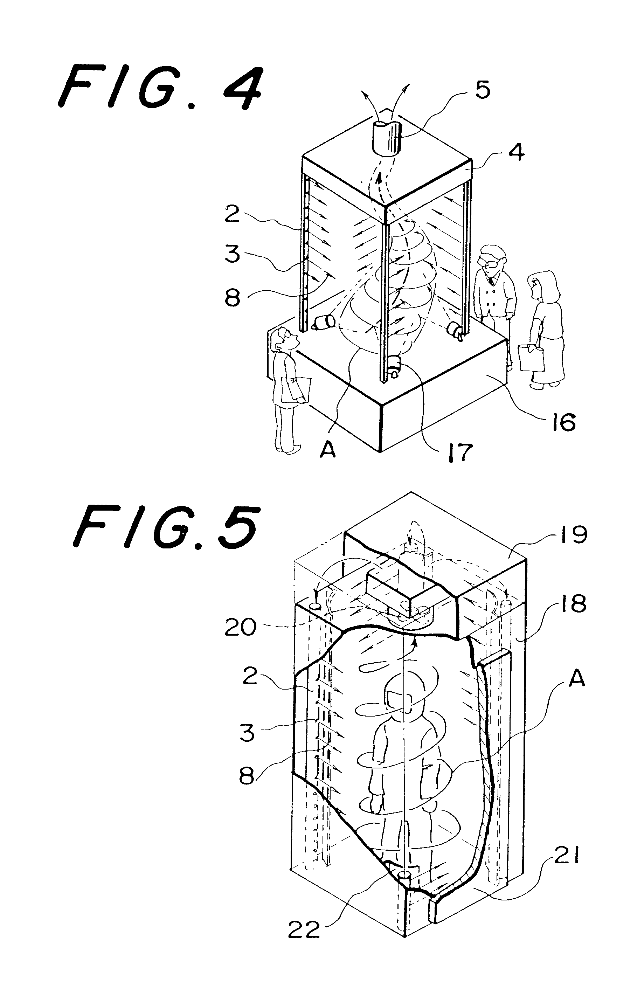

Fig. 4 shows a method of producing a decoration.

Fig. 5 shows an air shower capsule,

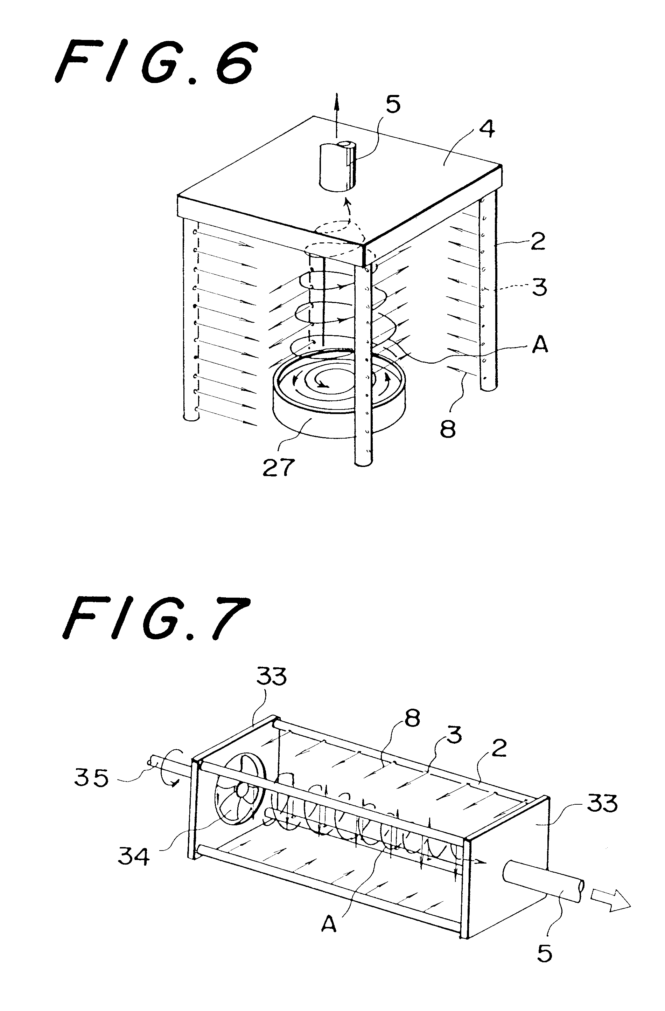

Fig. 6 shows a method of agitating a fluid,

Fig. 7 shows a method of transmitting a torque,

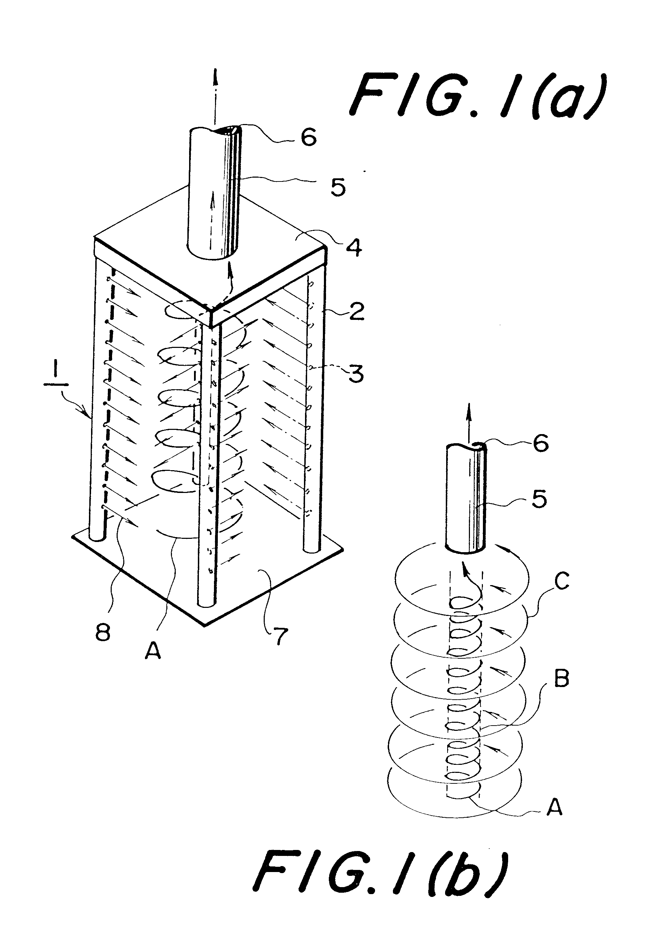

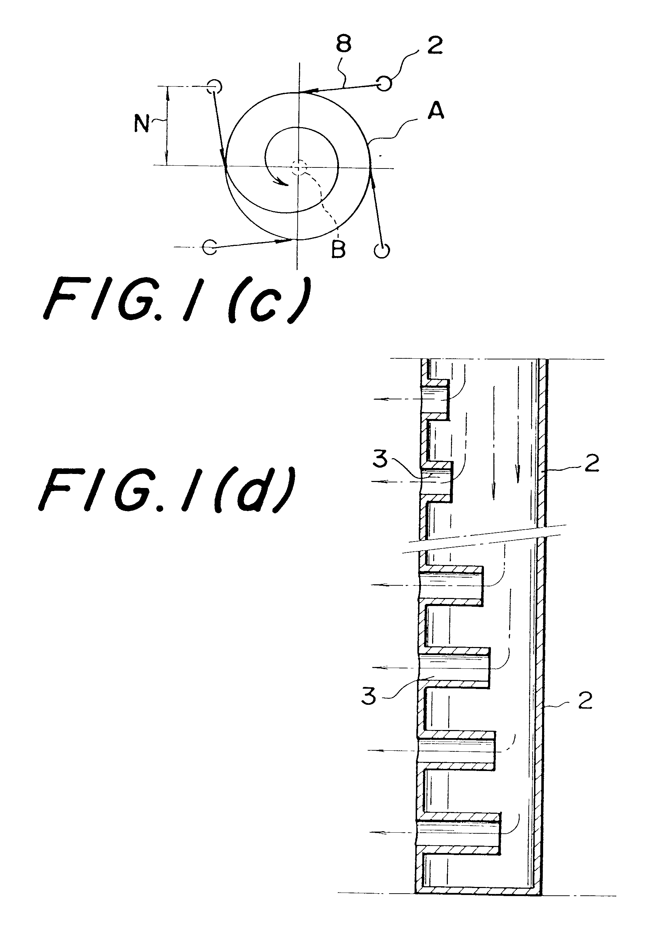

As shown in Fig. 1(a), an air tornado generating apparatus 1 comprises four air supply pipes 2. As shown in Fig. 1(d), in each air supply pipe 2, several air supply ports 3 are vertically arranged at regular intervals and are molded in the form of successively longer pipes arranged in the vertical direction. Also, as shown in Fig. 1(a), the respective air supply pipes 2 are fitted to an air extraction hood 4 in such a manner that the air supply ports 3 of each air supply pipe 2 are directed toward an adjacent air supply pipe 2, on the right side in the drawing. An air extraction pipe 5 provided with an air extraction port 6 is fitted to the central part of the air extraction hood 4, through which air is extracted by suction. A bottom plate 7 shields the space between it and the air extraction hood 4.

The principle by which this apparatus may generate an air tornado will now be described. When air is fed into the respective air supply pipes 2 by means of a blower or the like, air will be blown out of the respective air supply ports 3. In particular air will be constantly blown out of successive ports in the direction of the adjacent pipe 2 defining a rotating direction so that air curtains 8 of horizontal streams in the directions indicted by the arrows may be formed to enclose the space within the apparatus by air curtains. As shown in Fig. 1-(b), the effect of the air curtain is to generate a rotary air stream or circulating stream C in the space within the apparatus between the respective air supply pipes 2. Furthermore the suction of air through port 6 forms a core part B within the rotary air stream (circulating steam). Thus, as is shown in Fig. 1(c), when the circulating stream is formed within the air curtains 8, a centrifugal force is given to the air molecules by this circulation while at the same time a negative pressure is produced in the center part of the circulating stream by the suction. However, due to the centrifugal force, this negative pressure range will not reach the peripheral part of the circulating air but will form a core part B along the center of the circulating stream extending uniformly for the height of the apparatus. This negative pressure core part B gives a centripetal force to the circulating air and, where the centrifugal force and centripetal force balance with each other, the circulating stream becomes an eddy current or spiral flow and an artificial "tornado" will be generated toward the air extraction port 6 while converging toward the center part of the eddy current.

The fluid characteristics of the thus generated tornado are

(1) the flow velocity toward the suction port is constant at positions separated from the suction port,

(2) so long as the centrifugal force of the eddy current and the centripetal force created by the negative pressure core part balance with each other, there will be generated a tornado that is stable from a very low speed range (of about 0.5 m./sec.) to a high speed range (above 20 m./sec.),

(3) as the tornado is generated along the center of the eddy current, by varying the shape of the connected eddy current generating mechanism, there can be formed different shaped vortices, e.g. vertical, horizontal, oblique or curved,

(4) the velocity of the eddy current as it converges in the center part is rapidly acceleratd from 5m/s in the periphery to 10 in the centre, and

(5) the rotating potential of the center core part of the tornado will remain strong even if separated from the suction port.

The result of an experiment concerning the embodiments shows that if the diameter of the air supply pipe ports 3 as shown in Fig. 1(d) is 44 mm, and the distance between the ports is 96 mm, a stable tornado may be formed if the amount and speed of the air is adjusted for the air tornado generating apparatus of Fig. 1(a). The calculation of the amount and speed of the air shall be shown in the following.

(1) Firstly, the speed of air will be reduced to a point half distance between the air supply pipes, then accelerated as the air spirals into the center part. The calculation of the accelerated air speed is:

$$V_\ell = 0.24 \ \frac{V_O}{\ell^{2/3}}$$

Wherein $V_\ell$ represents air velocity at a point separated by $\ell$ m. and $V_O$ represents an initial blown air velocity.

(2) When the air curtain works, it sucks outside air in as the amount of air is increased. The sucked in air volume is calculated as follows:

If $\ell \leqslant 1.2$ m , $Q_\ell = 1.2 . \ell.Q_O$
If $\ell \geqslant 1.2$ m , $Q_\ell = 1.36. \ell^{1/3}.Q_O$

Wherein $Q_\ell$ represents the outer air volume at a point separated by $\ell$ m, and $Q_O$ represents a blown air volume.

(3) The relationship of the air volume between the stable tornado and the sucked in air is

$$Q_e = 4Q_O + 4Q_\ell + Q_g$$

Wherein $Q_g$ represents the amount of the detrimental gasses generated in the tornado, and $Q_e$ is the volume of extracted air and gases.

Fig. 2 shows a method of collecting and discharging detrimental gases and dusts using an artifically generated air tornado. A suction duct 10 is fitted through a damper 11 in the central part of an air extraction hood 4 and four air supply pipes 2 are connected to blowers 9. The reference numeral 12 represents a vessel containing dusts 13. When the present device is set above the vessel 12 and air is blown from the blowers 9, air is blown out of ports 3 of the air supply pipes 2 and air curtains 8 in the directions indicated by the arrows will be formed between the respective air supply pipes 2. By the formation of these air curtains 8 and the air suction by the suction duct 10, a core part B will be formed toward the suction duct 10 and, at the same time, an air tornado A will be formed. By this tornado A the dusts 13 within the vessel 12 will be discharged out through the suction duct 10. In this embodiment, the collection of dusts is shown, however, it will be appreciated that detrimental gases could similarly be collected. In this method, by using the characteristics that the flow velocity of the tornado toward the extraction port will not vary even if separated from extraction port and that the eddy current will converge in the center part and accelerate, a generating source of detrimental gases and dusts is arranged so as to be enclosed within the air curtains so that the generated detrimental gases and dusts may be strongly collected and discharged by the generated air tornado.

Fig. 3 shows a method of local cooling or heating. An exhaust fan 15 is internally provided in the central part of an air feeding duct 14, and an air suction pipe 5 is fitted to the fan 15. Three air supply pipes 2 are triangularly fitted to the air feeding duct 14. This device is set in a desired place and cold air or warm air is fed to the air feeding duct 14 so that a triangular air space may be formed within the air curtains 8 which may be cooled or warmed depending, of course, on the temperature of the air provided to pipes 2. Also, at the same time, the air within the curtains can be purified, for example to remove cigarette smoke. This embodiment shows the case of a triangular air space formed from three air pipes, however a square or polygonal air space could similarly be heated or cooled. In this arrangement, by using the characteristic that a stable tornado will be generated even in a low speed range, and that the eddy current will converge in the center part and will be directed to the suction port, a heater or cooler is arranged at the suction port so that warm air or cold air may be sucked into the center part and repeatedly circulated to efficiently warm or cool the space enclosed within the air curtains.

Fig. 4 shows an embodiment in the form of apparatus providing a decoration or work of art. The apparatus is set upon a stand 16 and a snaked artificial tornado is generated and is illuminated by lights 17 to be a decoration. The shape of the tornado A can be freely transformed by varying the strength of the eddy current and the volume of sucked air, for example by adjusting the amount of air blown through the pipes or sucked from the center. This embodiment exploits the characteristic that the air velocity toward the suction port will not vary even if separated from the suction port whereby a vertical, horizontal, oblique or curved tornado can be freely formed. The tornado is made visable by inducing smoke to the center from a smoke generating source which is then colorfully illuminated and is varied to be observed as a decoration. Such a decoration may, for example, be used to attract peoples attention in a department store.

Fig. 5 shows an embodiment in the form of an air shower. A compartment 18 is provided with an air supply pipe 2 in each corner and an air feeding duct 19 internally provided with an exhaust fan 20. An air filter may be provided with the exhaust fan. This device is of the same principle as the apparatus shown in Fig. 1. A door 21 is provided so that a person may enter the box-shaped air shower compartment and a tornado can be generated around a human body within the shower compartment so as to remove, for example, dusts and germs deposited on the working suit.

Fig. 6 shows an embodiment in which the invention is used to agitate a fluid. The apparatus shown in Fig. 1 is set on a vessel 27 containing a fluid so that, when a tornado is generated, the fluid within the vessel is rotated. In this embodiment since even if the center part of the tornado is separated from the suction port, the rotating potential of the tornado will remain strong. Thus the vessel containing the fluid may be placed on the floor below the center part of the tornado so that the fluid in the vessel will be strongly agitated by air in the free space above the vessel.

Fig. 7 shows an embodiment in which the invention is used to transmit a torque. Four air supply pipes 2 are horizontally arranged between a shielding plate 33 provided with an air suction pipe 5 and a shielding plate 33 provided with a rotor 34 operatively connected with a rotary shaft 35. In this embodiment the rotor 34 is caused to rotate by the generated air tornado A.

**Claims**

1. Apparatus for generating an artificial tornado in a fluid, comprising means (2,3) for inducing a region of rotary fluid flow, and suction means (5,6) arranged to extract fluid from a central portion of said region simultaneously with the induction of said rotary fluid flow to create a low pressure central portion of said region, whereby a tornado may be generated directed toward said suction means (5,6) characterised in that said rotary flow induction means comprises a plurality of parallel fluid supply pipes (2) defining a space therebetween, each said supply pipe (2) having a plurality of ports (3) through which fluid may be directed toward an adjacent supply pipe (2), fluid being directed into said supply pipes (2) from one end and each said fluid supply port (3) comprising an inwardly directed tube, the length of said tubes increasing in the direction of fluid flow through said supply pipe (2), said supply pipes (2) being interconnected at at least one end by a shield member (4,14,19,33), and in that said suction means (5,6) are fixed in said shield member (4,14,19.33), wherein said tornado may be generated within the space defined between said fluid supply pipes.

2. Apparatus as claimed in claim 1 wherein said suction means is connected to a discharge pipe (6).

3. Apparatus as claimed in claim 1 or 2 wherein said suction means (5,6) is operatively connected to said supply pipes (2) whereby fluid may be recirculated through said apparatus.

4. Apparatus as claimed in claim 3 wherein heating or cooling means is associated with said suction means (5,6).

5. Apparatus as claimed in any of claims 1 to 4 wherein a filter means is associated with said suction means (5,6).

**Revendications**

1. Appareil permettant de produire un tourbillon artificiel dans un fluide, comprenant des moyens (2, 3) servant à induire une région d'écoulement rotatif de fluide, et des moyens d'aspiration (5, 6) disposés de façon à extraire le fluide d'une partie centrale de ladite région simultanément à l'induction dudit écoulement rotatif de fluide de façon à créer une partie centrale à basse pression de ladite région, de sorte qu'un tourbillon peut être créé en étant dirigé vers lesdits moyens d'aspiration (5, 6), caractérisé en ce que les moyens d'induction d'écoulement rotatif comprennent plusieurs tuyaux d'alimentation en fluide (2) parallèles et délimitant un espace entre eux, chaque tuyau d'alimentation (2) comportant plusieurs orifices (3) par lesquels le fluide peut être dirigé vers un tuyau d'alimentation (2) adjacent, le fluide étant dirigé dans les tuyaux d'alimentation (2) à partir d'une extrémité et chaque orifice d'alimentation en fluide (3) comprenant un tube dirigé vers l'intérieur, la longueur de ces tubes augmentant suivant le sens de l'écoulement de fluide dans le tuyau d'alimentation (2), les tuyaux d'alimentation (2) étant reliés entre eux à au moins une extrémité par un élément formant écran (4, 14, 19, 33), et en ce que les moyens d'aspiration (5, 6) sont fixés dans cet élément formant écran (4, 14, 19, 33), de sorte que le tourbillon peut être produit à l'intérieur de l'espace délimité entre les tuyaux d'alimentation en fluide.

2. Appareil suivant la revendication 1, dans lequel les moyens d'aspiration sont reliés à un tuyau d'évacuation (6).

3. Appareil suivant la revendication 1 ou 2, dans lequel les moyens d'aspiration (5, 6) sont reliés en coopération fonctionnelle aux tuyaux d'alimentation (2), de sorte que le fluide peut être recyclé dans l'appareil.

4. Appareil suivant la revendication 3, dans lequel des moyens de chauffage ou de refroidissement sont associés aux moyens d'aspiration (5, 6).

5. Appareil suivant l'une quelconque des revendications 1 à 4, dans lequel des moyens de filtration sont associés aux moyens d'aspiration (5, 6).

**Patentansprüche**

1. Vorrichtung zur Erzeugung eines künstlichen Wirbelwinds in einem Fluid umfassend ein Mittel (2,3) zum Induzieren eines Bereichs rotierender Fluidströmung, und ein Absaugmittel (5,6), welches angeordnet ist, um gleichzeitig mit der Induktion der rotierenden Fluidströmung Fluid aus einem Mittelabschnitt des Bereichs abzuziehen, um in dem Bereich einen Mittelabschnitt niedrigen Drucks hervorzurufen, wodurch ein auf das Absaugmittel (5,6) gerichteter Wirbelwind erzeugt werden kann, **dadurch gekennzeichnet,** daß das Mittel zur Induktion der rotierenden Strömung eine Mehrzahl von parallelen Fluidzufuhrrohren (2) umfaßt, die zwischen sich einen Raum festlegen, wobei jedes Fluidzufuhrrohr (2) eine Mehrzahl von Öffnungen (3) aufweist, durch die Fluid auf ein benachbartes Zufuhrrohr (2) gerichtet werden kann, wobei Fluid an einem Ende in das Zufuhrrohr (2) eingeleitet wird und jede der Fluidzufuhröffnungen (3) eine nach innen gerichtete Röhre umfaßt, wobei die Länge der Röhren in der Richtung des Fluidstroms durch das Zufuhrrohr (2) zunimmt, wobei die Zufuhrrohre (2) an wenigstens einem Ende durch ein Abschirmelement (4,14,19,33) miteinander verbunden sind, und daß das Absaugmittel (5,6) in dem Abschirmelement (4,14,19,33) befestigt ist, wobei der Wirbelwind in dem zwischen den Fluidzufuhrohren festgelegten Raum erzeugt werden kann.

2. Vorrichtung nach Anspruch 1, bei welcher das Absaugmittel mit einem Auslaßrohr (6) verbunden ist.

3. Vorrichtung nach Anspruch 1 oder 2, bei welcher das Absaugmittel (5,6) betriebsmäßig mit den Zufuhrrohren (2) verbunden ist, wodurch Fluid im Kreislauf wieder durch die Vorrichtung geführt werden kann.

4. Vorrichtung nach Anspruch 3, bei welcher dem Absaugmittel (5,6) ein Heiz- oder Kühlmittel zugeordnet sind.

5. Vorrichtung nach jedem der Ansprüche 1 bis 4, bei welcher dem Absaugmittel (5,6) ein Filtermittel zugeordnet ist.

FIG. 1(a)

FIG. 1(b)

FIG. 1 (c)

FIG. 1 (d)

# *FIG.2*

# *FIG.3*

# FIG. 4

# FIG. 5

# FIG.6

# FIG.7